Europäisches Patentamt

(19) European Patent Office

Office européen des brevets

(11) Publication number: **0 110 262**
**A2**

## (12) EUROPEAN PATENT APPLICATION

(21) Application number: **83111545.6**

(22) Date of filing: **18.11.83**

(51) Int. Cl.³: **G 01 N 21/47**

(30) Priority: **29.11.82 US 445203**

(43) Date of publication of application: **13.06.84**
**Bulletin 84/24**

(84) Designated Contracting States: **DE FR GB IT SE**

(71) Applicant: **MILES LABORATORIES, INC., 1127 Myrtle Street, Elkhart Indiana 46514 (US)**

(72) Inventor: **Brunsting, Albert, 51718 Northfield Drive, Elkhart, IN 46514 (US)**

(74) Representative: **Jesse, Ralf-Rüdiger, Dr. et al, Bayer AG Zentralbereich Patente Marken und Lizenzen, D-5090 Leverkusen 1 Bayerwerk (DE)**

(54) **Optical readhead.**

(57) Reflectance apparatus is disclosed for obtaining the measurement of reflected light in which a light trap is positioned in the light path between the specimen and the detector to minimize stray light reflected from the specimen being analyzed as light from the light source is reflected from the specimen to the detector.

EP 0 110 262 A2

0110262

## OPTICAL READHEAD

## BACKGROUND OF THE INVENTION

*Field of the Invention*

The present invention relates to an optical readhead for reflectance devices and, more particularly, to an optical readhead for illuminating a test device and measuring reflected light.

*Description of the Prior Art*

The art of analytical chemistry has been greatly advanced since biochemistry began emerging as a primary scientific frontier, requiring increasingly sophisticated analytical methods and tools to solve problems, the solutions to which were never before attempted. Likewise, the medical profession has lent impetus to the growth of analytical chemistry, with its desiderata of both high precision and speed in obtaining results. This remarkable progress has been still further spurred by industries such as brewing, chemical manufacturing and others.

To satisfy the needs of these expanding technologies a myriad of analytical procedures, compositions and apparatuses have evolved, including solution chemistry techniques, automated machinery and the so called "dip-and-read" type reagent strips.

MS-1260

- 2 -                              C110262

Reagent strip test devices enjoy wide use in many analytical applications, especially in the chemical analysis of biological fluids, because of their relatively low cost, ease of usability, and speed in obtaining results.  In medicine, for example, numerous physiological functions can be monitored merely by dipping reagent test devices into a sample of body fluid, such as urine or blood, and observing a detectable response such as change in color or change in the amount of light reflected from or absorbed by the test device.  Many of these test devices produce a detectable response which is at least semiquantitative, if not quantitative.  Thus, by measuring the response after a predetermined time, the analyst can obtain not only a positive indication of the presence of a particular constituent in a test sample, but also an estimate of how much of the constituent is present. Such test devices provide the physician with a facile diagnostic tool as well as the ability to gauge the extent of disease or bodily malfunction.

Illustrative of such test devices currently in use are products available from the Ames Division of Miles Laboratories, Inc., under the trademarks CLINISTIX®, MULTISTIX®, DIASTIX®, DEXTROSTIX®, and others. Test devices such as these usually comprise one or more carrier matrices, such as an absorbent paper, having incorporated therewith a particular reagent or reactive system which manifests a color change in the presence of a specific sample component.  Depending on the reactant system incorporated with a particular matrix, these devices can detect the presence of glucose, ketone bodies, bilirubin, urobilinogen, occult blood, nitrite, and other substances.  The specific color change and the intensity of the color observed within a specific time range after contacting the test device with sample is indicative of the

MS-1260

presence of a particular component and its concentration in the sample. Some of these test devices and their reactant systems are set forth in U.S. Patent Nos. 3,123,443 (CLINISTIX®); 3,212,855 (KETOSTIX®); 3,184,668; 3,164,534 and 2,981,606 (DIASTIX®); and 3,298,789; 3,092,465; 3,164,534 and 2,981,606 (DEXTRO-STIX®).

The development of automated instruments which eliminate the need for manual manipulation of the chemical reactants and which give programmed readouts have greatly facilitated the use of such test devices by improving the reproducibility of the tests by substantially eliminating subjectivity of the user as a factor in obtaining a reliable measurement. Various reflectance meters have been employed which use a light source and photoelectric cell or sensing means to determine color values by measuring the amount of light reflected from a colored surface illuminated by the reference light source. In order, however, to obtain reliable readings it has been necessary to position the light source and the sensing means in such a fashion as to minimize the effects of specular reflection, which occurs at the surface of the test device being measured.

In order to minimize adverse effects of specular reflection, e.g., effects dependent upon the topography of a sample and/or the color temperature of the light source, instruments designed to measure diffuse reflectance have resorted to an axis of illumination which is normal of the specimen's plane and an axis of detection which is at an angle 45 degrees to normal of the specimen's plane, as in U.S. Letters Patent Nos. 3,604,815 and 3,907,503. Obviously, there is a reciprocal configuration with the axis of illumination being at an angle 45 degrees to the specimen's normal and the axis of detection parallel to the normal of the

MS-1260

C110262

specimen's plane. Such configurations have required rather complicated arrangements of components and even the use of fiber optics to conveniently transmit light to a desired location. Others have proposed the use of multiple light sources positioned at an angle of 45 degrees to normal and collecting reflected light normal to the specimen, as in U.S. Patent No. 4,279,514. The aforementioned geometries have been considered most important in making reflection measurements. See, for example, the International Commission on Illumination publication CIE No. 44(TC2.3) 1979 entitled "Absolute Methods for Reflectance Measurements".

The present invention is particularly directed to the construction of a small, reliable and inexpensive optical readhead for illuminating a reagent pad (specimen) and obtaining the measurement of nonspecular reflected light. Ideally, the overall outside dimensions of the reflectance instrument should be as small as possible such that it can be carried in a pocket or a purse.

## SUMMARY OF THE INVENTION

In accordance with the present invention, an optical readhead for illuminating a reagent pad and obtaining a measurement of nonspecular reflected light is disclosed in which a light trap is present which minimizes stray light passing from the light source to one or more detectors.

MS-1260

## BRIEF DESCRIPTION OF THE DRAWINGS

Other and further advantages and features of the invention will be apparent to those skilled in the art from the following detailed description thereof, taken in conjunction with the accompanying drawings, in which:

Fig. 1 is a schematic side view, in partial cross section of apparatus in accordance with the present invention in which the axis of illumination is parallel to the normal of the specimen and axis of detector is positioned at an angle 45 degrees to normal;

Fig. 2 is a schematic side view in partial cross section of another embodiment in accordance with the present invention in which the axes of illumination and detection are in one plane and the specimen is at an angle ($\phi$) to said plane;

Fig. 3 is a bar graph illustrating relative photocurrents of optical readheads with (A) and without (B) a light trap, said readheads being similar in construction to the embodiment illustrated in Fig. 1; and

Fig. 4 is a bar graph illustrating relative photocurrents achieved utilizing optical readheads similar to that of Fig. 1 with (A) and without (B) light traps when a scratched specimen window is present in the readheads.

## DESCRIPTION OF THE PREFERRED EMBODIMENTS

The apparatus forming the subject matter of the present invention is characterized by at least one light source, at least one detector (e.g., photoelectric cell), a specimen holder and a light trap positioned between the detector(s) and specimen(s).

MS-1260

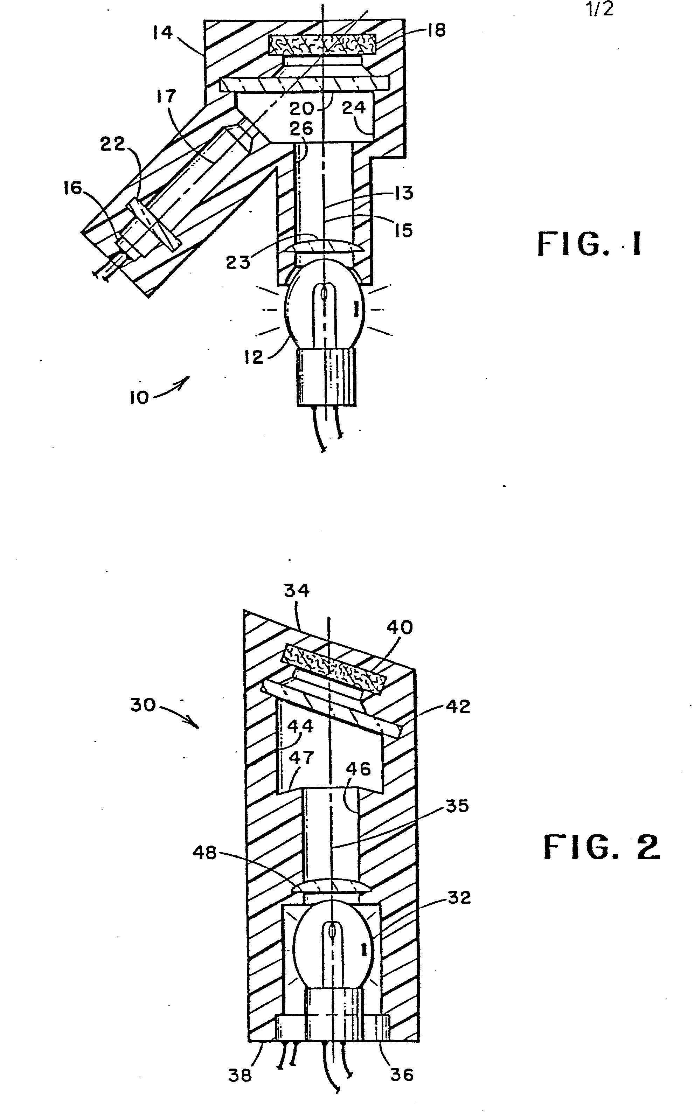

Fig. 1 of the drawings illustrates apparatus 10 for the measurement of reflectance. This apparatus includes a light source 12, a specimen holder 14 and reflected light detector 16. The axis of illumination 13 is parallel to the axis 15 which is normal to specimen 18. The axis of detection 17 is at an angle 45 degrees to axis 15. Accordingly, reflectance from specimen 18, held by specimen holder 14, can be measured by illuminating the specimen using light source 12 and measuring the reflected light using detector 16.

Typically, apparatus 10 of Fig. 1 is constructed to have a glass window 20 positioned over test device or specimen 18. In addition, reflectance device 10 can have a spectral filter 22, for the purpose of selecting a spectral region of interest, positioned in front of reflected light detector 16. Lens 23 can be used to focus light from light source 12 on specimen 18.

In accordance with the present invention, the reflectance device 10 has a light trap 24 positioned between detector 16 and specimen 18. The precise configuration of light trap 24 is not critical provided it is larger than light transmission path 26 from light source 12 to specimen 18 such that the walls of the light trap are not directly illuminated by the light source. As indicated above, the purpose of light trap 24 is to prevent stray light from passing to detector 16. Advantageously, light trap 24 is coated with dull black paint and, if desired, the light trap can also contain baffles which help suppress stray light.

Fig. 2 is a schematic illustration of another embodiment in accordance with the present invention comprising a reflectance device 30 composed of a light source 32, specimen holder 34 and a detector 36. Both

MS-1260

C110262

light source 32 and detector 36 are mounted on the same surface 38 in close proximity to each other. Specimen holder 34 is positioned at an angle of approximately 20° with respect to the plane containing the axis of illumination and the axis of detection 35.

Specimen holder 34 holds specimen 40 in position relative to window 42. Light trap 44 is positioned adjacent to window 42. Light transmission path 46 is of reduced diameter compared with light trap 44. Thus, light from light source 32 passes through light transmission path 46 and window 42 in order to illuminate specimen 40. Reflected light from specimen 40 returns through light transmission path 46 to detector 36. As emphasized in Serial No. 438,010, filed November 1, 1982, the presence of light source 32 and detector 36 mounted on the same plane 38 in close proximity to each other not only reduces the cost of the overall apparatus, requiring a less expensive construction, but it also facilitates miniaturization of the apparatus.

As in the case of light trap 24 in Fig. 1, light trap 44 of Fig. 2 can be coated with dull black paint and can contain baffles to facilitate the entrapment or suppression of stray light. Light trap 44 is shown with sloped walls 47-47 which also aid in suppressing stray light. Additionally, light transmission path 46 can contain threads or baffles to further minimize the passage of stray light to detector 36.

The specific light source(s) and detector(s) employed are not critical. One preferred light source is light emitting diode (LED) module HLMP-3950 made by Hewlett-Packard Components of Palo Alto, California. It will be understood, however, that the light source can be any suitable incandescent or nonincandescent light source and may, if desired, have a lens, such as integral lens 23 (Fig. 1) or 48 (Fig. 2), to focus the

MS-1260

light. Moreover, the light source can be frosted or used with diffusion means to cause diffuse illumination of the specimen. A preferred detector is a photodiode sensor with an integral linear photocurrent amplifier CS 2012 made by Cherry Semiconductor Corp. of Cranston, Rhode Island.

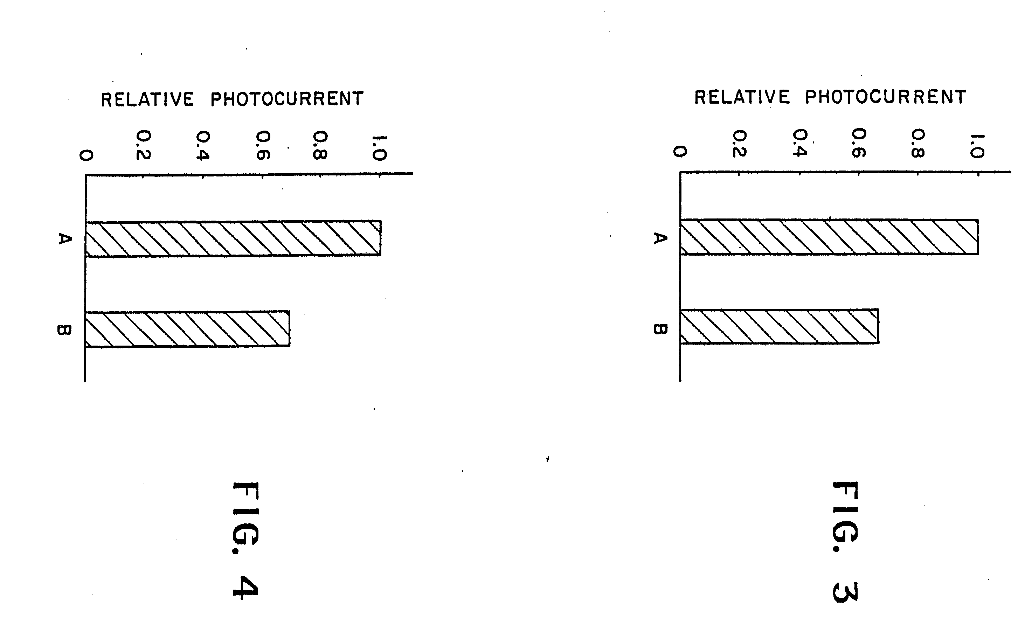

The bar graphs in Figs. 3 and 4 indicate the measured relative photocurrents of the optical readhead (A) illustrated in Fig. 1 compared with a similar readhead (B) without the presence of a light trap. Clearly, as seen in Fig. 3, the optical readhead in accordance with present invention provides better throughput (in excess of 30 percent more photocurrent compared to the optical readhead without the light trap). Moreover, as shown in Fig. 4, scratches on the specimen window are much less a factor when a light trap is present.

One way to compare the effectiveness of the light trap is to measure the reflectance with and without a light trap and compare the resulting reflectance values to the reflectance of a dark pad. The accepted reflectance value for a "dark" (i.e., dull black) pad is 5.18 percent. Employing a light trap, similar to that illustrated in Fig. 1, a reflectance of 4.77 percent was obtained whereas in a similar reflectance device without the light trap a reflectance value of 6.55 percent was obtained.

The material utilized in the construction of the optical readhead is not critical; any suitable opaque material (e.g., metal or plastic) can be employed. Preferably, however, the optical readhead is constructed of a molded black plastic, such as an acrylonitrile-butadiene-styrene copolymer, polymethyl methacrylate, polystyrene, polyethylene, etc. As indicated above, the configuration of the light trap

C110262

can be varied, but the light trap surface should not be directly illuminated by the light source employed.

The use of a light trap in accordance with the present invention permits small, inexpensive, and reliable reflectance devices to be constructed. In fact, it has been found to be possible utilizing the present invention to construct an optical readhead which is about a third the size of that currently used in the GLUCOMETER reflectance photometer manufactured by the Ames Division of Miles Laboratories. Not only is the size reduced by about a third, but the cost of the optical readhead in accordance with the present invention results in a savings of approximately 20 percent compared with the optical readhead utilized in the GLUCOMETER reflectance photometer. The substantial savings in size and in expense, without any decrease in reliability, are achieved due to the presence of the light trap which permits the novel approach of the present invention to be taken.

From the foregoing, it will be seen that this invention is well adapted to attain all of the ends and objects hereinabove set forth, together with other advantages which are obvious and which are inherent to the system. Stray light rays originating from the light source or specimen are minimized in a manner which is convenient, simple, relatively inexpensive, positive, effective and reliable.

It should be understood that many variations within the skill of those in the art can be made, including the use of multiple light sources, the use of multiple detectors, the reversal in position of the light source and detector, the use of light sources differing in transmitted wave length, the use of filters to limit the light source transmitted or the reflected light detected, etc.

MS-1260

0110262

Obviously, many other modifications and variations of the inventions as hereinbefore set forth can be made without departing from the spirit and scope thereof.

MS-1260

C110262

WHAT IS CLAIMED IS:

1. Apparatus for measuring reflected light which comprises a light source, means for supporting a specimen having a surface the reflectance of which is to be measured upon exposure to light emitted from said light source, and means for detecting light reflected from the surface of the specimen, wherein said apparatus is characterized by the presence of a light trap positioned between the specimen and the detector.

2. The apparatus of claim 1 in which the light trap includes light baffles.

3. The apparatus of claim 1 in which the light trap is positioned adjacent to a window covering the specimen.

4. The apparatus of claim 1 in which the light source is an incandescent lamp.

5. The apparatus of claim 4 in which the incandescent lamp has an integral lens.

6. The apparatus of claim 4 in which the incandescent lamp has a diffusing, translucent surface.

7. The apparatus of claim 1 in which the light source is a light emitting diode.

8. The apparatus of claim 1 in which a spectral filter is located between the specimen and detector.

MS-1260

FIG. 1

FIG. 2

FIG. 3

FIG. 4